# EUROPEAN PATENT SPECIFICATION

(11) **EP 4 163 132 B1**
(45) Date of publication and mention of the grant of the patent: **01.04.2026**
(21) Application number: 22200365.9
(22) Date of filing: 07.10.2022
(51) Int. Cl.: B60C 19/00, G06K 19/077, H01Q 1/22, B60C 23/04

(54) **TIRE**
REIFEN
PNEUMATIQUE

(30) Priority: 07.10.2021 KR 20210133119
(43) Date of publication of application: 12.04.2023
(73) Proprietor: Nexen Tire Corporation, Yangsan-si, Gyeongsangnam-do 50592 (KR)
(72) Inventor: JE, Han Sol, 50592 Yangsan-si (KR)
(74) Representative: Mewburn Ellis LLP

(56) References cited:
- WO-A1-2021/106918
- DE-A1- 102019 213 190
- JP-A- 2021 129 301
- KR-A- 20100 120 505
- US-A1- 2009 151 828
- US-A1- 2021 070 110

## Description

### BACKGROUND

### 1. Field

The present invention relates to a tire.

### 2. Description of the Related Art

Moving means operated by users, for example, vehicles, are composed of many parts, and among them, tires substantially affect the driving of the moving means, and in particular, can be said to be one of the key parts for securing the safety of a user. Meanwhile, such tires may be used in various moving means, for example, aircrafts or other various moving means, in addition to the vehicles.

In particular, due to the development of the industry, the movement of logistics and the amount of work of individuals have been increased, and accordingly, the number of vehicle operations is gradually increased due to the increase in movement and the increase in family activities.

Meanwhile, as the number of mechanical or electronic parts included increases in accordance with the development of vehicles on which tires are mounted, the generation of static electricity is increased. In particular, as the number of hybrid or electric vehicles increases, the frequency of the generation of the static electricity and the magnitude of the generated static electricity also increase, and thus, there is a limit to securing driving stability and improving the ability to precisely control driving.

Meanwhile, there is a limit to improving efficiency in terms of mass production of tires, increase in usage of tires, and management of various pieces of information through tires.

JP 2021 129301 A proposes to provide an RFID module that can improve adhesion between an antenna and a coating layer that covers the antenna while preventing corrosion of the antenna included in the RFID module and improve communication of the RFID module, and a pneumatic tire with the RFID module embedded. The RFID module includes: an IC substrate that stores data; an antenna that transmits and receives data and has a plating layer on a surface; and a coating layer that covers the antenna so that it comes into direct contact with the plating layer.

KR 2010 0120505 A proposes an RFID tag-laid tire to enhance the external directivity of an RFID tag. A first topping rubber covers the tire outside of an RFID tag and a second topping rubber covers the tire inside of the RFID tag. The first topping rubber is formed from the rubber composition, which has a permittivity higher than the second topping rubber.

US 2021/070110 A1 proposes a heavy goods vehicle tire with a radial carcass reinforcement, made up of a single layer of metal reinforcing elements anchored in each of the beads by a turn-up around a bead wire. The turn-up of the carcass reinforcement layer and the main part of the carcass reinforcement layer are coupled, and a passive radiofrequency communication module is placed facing the coupling region at the interface between two layers of rubber compounds.

WO 2021/106918 A1 proposes a pneumatic tire for which the communication capability of a transponder can be ensured.

US 2009/151828 A1 proposes a pneumatic tire comprising an electronic sensing device at least partially encapsulated by an elastomeric composition, the elastomeric composition comprising: 100 parts by weight of at least one elastomer; and from 25 to 100 parts by weight, per 100 parts by weight of elastomer (phr) of a thermoplastic having a melting temperature ranging of less than 200° C.

DE 10 2019 213190 A1 proposes pneumatic vehicle tires, with at least one electrical component in an elastic region of the vehicle tire and at least one electrically conductive connecting element located in the vehicle tire for supplying voltage to the electrical component and/or for transmitting signals from the electrical component to a processing unit.

### SUMMARY

The present invention provides a tire as set out in claim 1.

Advantageously, the tire allows tire-related information to be easily managed.

Additional aspects will be set forth in part in the description which follows and, in part, will be apparent from the description, or may be learned by practice of the presented embodiments.

In an embodiment, the electronic element unit may include at least one electronic element, and the radio wave control cover layer may be disposed to cover at least one surface of the electronic element.

In an embodiment, the electronic element unit may include at least one electronic element, and the radio wave control cover layer may be disposed between the electronic element and one region of the tire body.

In an embodiment, the electronic element unit may include at least one electronic element, and the radio wave control cover layer may include a first layer and a second layer disposed to cover both sides of the electronic element.

In an embodiment, the electronic element unit may include at least one electronic element and at least one antenna portion connected to the electronic elements, and the radio wave control cover layer may be formed to cover the electronic element and the antenna portion.

In an embodiment, the resistance control material may include a silicon oxide-based material.

In an embodiment, the resistance control material may include a talcum-based material.

In an embodiment, the resistance control material may include a calcium carbonate-based material.

Other aspects, features, and advantages other than the above-described features will be apparent from the following drawings, claims, and detailed description.

### BRIEF DESCRIPTION OF THE DRAWINGS

The above and other aspects, features, and advantages of certain embodiments of the invention will be more apparent from the following description taken in conjunction with the accompanying drawings, in which:
FIG. 1 is a schematic view for describing a tire according to one embodiment of the invention;
FIG. 2 is a view for describing an electronic element unit of FIG. 1;
FIG. 3 is a view illustrating an example of the electronic element unit of FIG. 2;
FIG. 4 is a view illustrating another example of the electronic element unit of FIG. 2;
FIG. 5 is a view illustrating still another example of the electronic element unit of FIG. 2;
FIG. 6 is a cross-sectional view taken along line VI-VI of FIG. 5;
FIG. 7 is a view illustrating yet another example of the electronic element unit of FIG. 2;
FIG. 8 is a cross-sectional view taken along line VII-VII of FIG. 7;
FIG. 9 is a cross-sectional view taken along line IX-IX of FIG. 7;
FIG. 10 is a front view of a tire;
FIG. 11 is a partial perspective view for describing the tire of FIG. 10 when viewed in one direction;
FIG. 12 is a cross-sectional view taken along line XII-XII of FIG. 10;
FIG. 13 is a cross-sectional view schematically illustrating a tire which is outside the scope the invention;
FIG. 14 is a cross-sectional view schematically illustrating a tire which is outside the scope of the invention;
FIG. 15 is a cross-sectional view schematically illustrating a tire which is outside the scope of the invention;
FIG. 16 is an enlarged view of portion P of FIG. 15;
FIG. 17 is a cross-sectional view schematically illustrating a tire which is outside the scope of the invention;
FIG. 18 is a cross-sectional view schematically illustrating a tire which is outside the scope of the invention;
FIG. 19 is a cross-sectional view schematically illustrating a tire which is outside the scope of the invention;
FIG. 20 is a cross-sectional view schematically illustrating a tire which is outside the scope of the invention;
FIG. 21 is a cross-sectional view schematically illustrating a tire according to an embodiment of the invention;
FIG. 22 is a cross-sectional view schematically illustrating a tire which is outside the scope of the invention;
FIG. 23 is a cross-sectional view schematically illustrating a tire according to yet another embodiment of the invention;
FIG. 24 is a cross-sectional view schematically illustrating a tire which is outside the scope of the invention; and
FIG. 25 is a cross-sectional view schematically illustrating a tire which is outside the scope of the invention.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. The embodiments are merely described below, by referring to the figures, to explain aspects. As used herein, the term "and/or"; includes any and all combinations of one or more of the associated listed items. Expressions such as "at least one of," when preceding a list of elements, modify the entire list of elements and do not modify the individual elements of the list.

The invention may include various embodiments and modifications, and embodiments thereof will be illustrated in the drawings and will be described herein in detail. The effects and features of the invention and the accompanying methods thereof will become apparent from the following description of the embodiments, taken in conjunction with the accompanying drawings. However, the invention is not limited to the embodiments described below, and may be embodied in various modes.

Hereinafter, the embodiments of the invention will be described below in detail with reference to the accompanying drawings, and when the embodiments of the invention are described with reference to the drawings, the same or corresponding components are given the same reference numerals, and repetitive descriptions thereof will be omitted.

Certain arrangements are also disclosed and illustrated that are outside the scope of the invention.

In the following embodiments, the terms "first," "second," and the like have been used to distinguish one component from another, rather than limitative in all aspects.

In the following embodiments, singular forms are intended to include plural forms as well, unless the context clearly indicates otherwise.

In the following embodiments, the terms such as "including," "having," and "comprising" are intended to indicate the existence of features or components disclosed in the specification, and are not intended to preclude the possibility that one or more other features or components may be added.

For convenience of description, sizes of components shown in the drawings may be exaggerated or reduced. For example, since the size and thickness of each component illustrated in the drawing are arbitrarily shown for convenience of description, the invention is not necessarily limited to those illustrated in the drawing.

In the following embodiments, an x-axis, a y-axis, and a z-axis are not limited to three axes of the rectangular coordinate system, and may be interpreted in a broader sense. For example, the x-axis, the y-axis, and the z-axis may be perpendicular to one another, or may represent different directions that are not perpendicular to one another.

When a certain embodiment may be implemented differently, a specific process sequence may be performed differently from the described order. For example, two consecutively described processes may be performed substantially at the same time or performed in an order opposite to the described order.

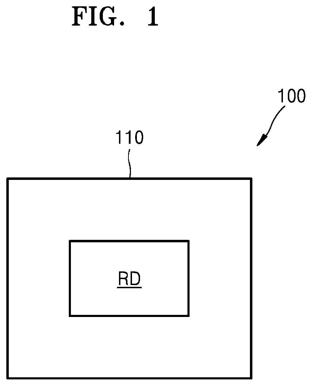

FIG. 1 is a schematic view for describing a tire according to one embodiment of the invention .

Referring to FIG. 1, a tire 100 may include a tire body 110 and an electronic element unit RD.

The tire body 110 is formed to include at least a tread region. For example, the tread region of the tire body 110 may include a region brought into contact with a road surface during driving of a moving means. The tread region may have one or more patterns, and a plurality of grooves may be formed to be adjacent to these patterns. The tire body 110 includes a sidewall connected to the tread region, for example, the sidewall may be formed in a region facing the outside and inside after the tire is mounted on a vehicle.

The moving means may be of a variety of types and may be, for example, vehicles, aircraft, and other various means to which tires may be applied.

The electronic element unit RD may be disposed in one region of the tire body 110, and specifically, may be disposed in an inner region of the tire body 110.

The electronic element unit RD is formed to transmit or receive one or more signals. For example, the electronic element unit RD may include one or more electronic elements.

As a specific example, the electronic element unit RD may include a sensor element capable of identifying one or more pieces of information.

Further, as an example, the electronic element unit RD may include a tag, which is used for radio-frequency identification (RFID), as an electronic element that uses a radio frequency.

As a specific example, the electronic element unit RD may include an integrated circuit (IC) chip, and such a chip may be formed to perform one or more processing operations and may include a memory and other circuitry.

As an optional embodiment, the electronic element unit RD may include one or more antenna portions, and such antenna portions may be connected to the IC chip.

According to the present embodiment, the electronic element unit RD may have various other types of structures, and the type of the RFID tag may be determined in various ways. For example, depending on the application, unlike the above, the electronic element unit RD may be in the form of a tag without having the IC chip. Further, the electronic element unit RD may have a structure in which a battery for operating the RFID is built-in, or may be a passive device type without a battery. In addition, when a memory is included in the IC chip provided in the RFID, various types of functions such as reading and writing the memory may be enabled.

One or more signals may be transmitted or received through the electronic element unit RD disposed in the tire 100, and various pieces of information may be secured and used by using the electronic element unit RD in the form of, for example, an RFID tag. As a specific example, information related to the use of the tire 100 or driving-related information after the tire 100 is mounted on a vehicle may be easily secured.

Further, various pieces of information for each tire may be easily managed, so that the various pieces of information may be easily and precisely managed in tire manufacturing, sales, and post-management.

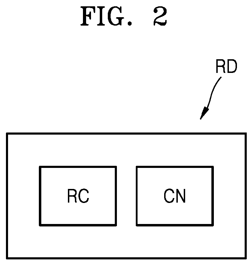

FIG. 2 is a view for describing the electronic element unit of FIG. 1.

Referring to FIG. 2, the electronic element unit RD may include an IC chip RC and a radio wave control cover layer CN.

In FIG. 2, the IC chip RC will be described as an example of the electronic element included in the electronic element unit RD.

The IC chip RC may be formed to process one or more signals and may include a memory and other circuitry.

The radio wave control cover layer CN may be disposed adjacent to the IC chip RC. The position of the IC chip RC may be stably maintained through the radio wave control cover layer CN. In addition, the radio wave control cover layer CN may protect the IC chip RC.

The radio wave control cover layer CN may have a high electrical resistance and may be disposed adjacent to the IC chip RC, so that the efficiency of an electrical signal through the electronic element unit RD may be improved. For example, a signal recognition distance at which the signal of the electronic element unit RD is recognized may be increased.

Meanwhile, the radio wave control cover layer CN may be disposed between the IC chip RC and one region of the tire body 110.

As an optional embodiment, the IC chip RC may be disposed such that a situation in which the IC chip RC is in direct contact with the tire body 110 through the radio wave control cover layer CN does not occur.

A more detailed description of the radio wave control cover layer CN will be described below.

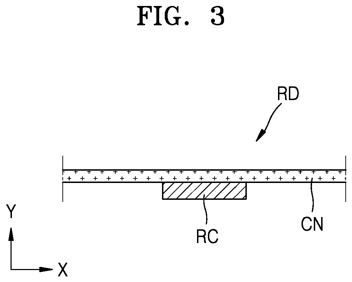

FIG. 3 is a view illustrating an example of the electronic element unit of FIG. 2.

Referring to FIG. 3, an electronic element unit RD may include an IC chip RC and a radio wave control cover layer CN.

The radio wave control cover layer CN may be disposed on one surface of the IC chip RC, for example, the IC chip RC may be disposed in one region of the radio wave control cover layer CN having a size greater than that of the IC chip RC in one direction or in both directions.

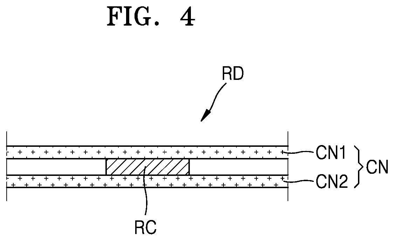

FIG. 4 is a view illustrating another example of the electronic element unit of FIG. 2.

Referring to FIG. 4, an electronic element unit RD may include an IC chip RC and a radio wave control cover layer CN. The radio wave control cover layer CN may include a first layer CN1 and a second layer CN2.

The first layer CN1 may be disposed on one surface of the IC chip RC, and the second layer CN2 may be disposed on the other surface thereof. For example, the IC chip RC may be disposed between the first layer CN1 and the second layer CN2.

As an optional embodiment, the IC chip RC may be disposed between the first layer CN1 and the second layer CN2 to be in close contact with the first layer CN1 and the second layer CN2.

As an optional embodiment, the IC chip RC may be disposed to be encapsulated by the first layer CN1 and the second layer CN2.

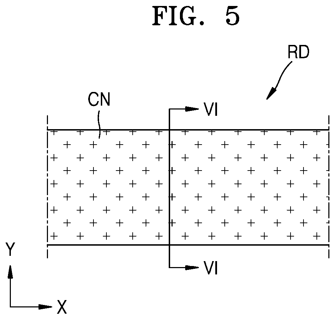

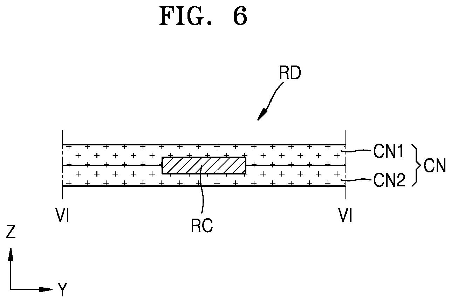

FIG. 5 is a view illustrating still another example of the electronic element unit of FIG. 2. FIG. 6 is a cross-sectional view taken along line VI-VI of FIG. 5.

Referring to FIGS. 5 and 6, an electronic element unit RD may include an IC chip RC and a radio wave control cover layer CN. The radio wave control cover layer CN may include a first layer CN1 and a second layer CN2.

The first layer CN1 and the second layer CN2 of the radio wave control cover layer CN may each be formed to have a length greater than a width. For example, each of the first layer CN1 and the second layer CN2 may have a width in a range of 0.5 centimeters (cm) to 2 cm, and may have a length in a range of 4 cm to 6 cm. In addition, as needed, the width and length of each of the first and second layers CN1 and CN2 may be variously determined according to the size and use of a tire to be applied.

The IC chip RC may be disposed between the first layer CN1 and the second layer CN2, for example, the IC chip RC may be disposed between the first layer CN1 and the second layer CN2 to be in close contact with the first layer CN1 and the second layer CN2. As an optional embodiment, the first and second layers CN1 and CN2 may be disposed to be connected to each other, for example, the first and second layers CN1 and CN2 may be disposed to be in contact with each other in a region in which the IC chip RC is not disposed. Accordingly, the IC chip RC may have a shape that is encapsulated between the first layer CN1 and the second layer CN2.

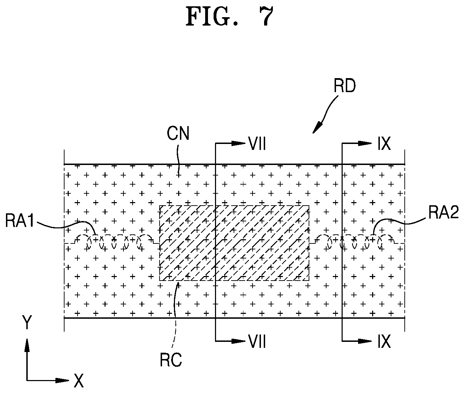

FIG. 7 is a view illustrating yet another example of the electronic element unit of FIG. 2.

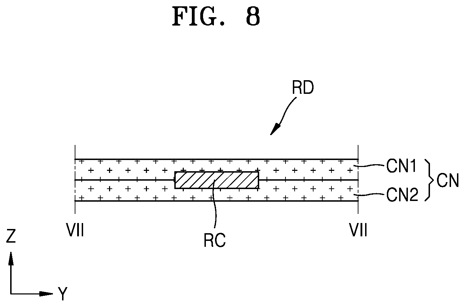

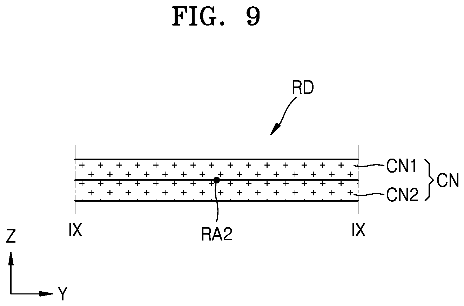

FIG. 8 is a cross-sectional view taken along line VII-VII of FIG. 7, and FIG. 9 is a cross-sectional view taken along line IX-IX of FIG. 7.

Referring to FIGS. 7 to 9, an electronic element unit RD may include an IC chip RC, one or more antenna portions RA1 and RA2, and a radio wave control cover layer CN.

The antenna portions RA1 and RA2 may be connected to the IC chip RC, and may communicate with the external, for example, a reader. The one or more antenna portions RA1 and RA2 may include a first antenna portion RA1 and a second antenna portion RA2, which may be respectively connected to opposite sides of the IC chip RC.

The radio wave control cover layer CN may include a first layer CN1 and a second layer CN2.

The IC chip RC and the one or more antenna portions RA1 and RA2 may be disposed between the first layer CN1 and the second layer CN2.

As an optional embodiment, the IC chip RC and the one or more antenna portions RA1 and RA2 may be disposed to be covered by the first and second layers CN1 and CN2.

The radio wave control cover layer CN described in the above-described examples may include various materials. For example, the radio wave control cover layer CN may include a rubber-based base material. As a specific example, the radio wave control cover layer CN may include a natural rubber or synthetic rubber material-based base material, and accordingly, when the radio wave control cover layer CN is applied to a tire and the tire moves, stable coupling between the radio wave control cover layer CN and the tire may be maintained.

In addition, the radio wave control cover layer CN may include a resistance control material in addition to the rubber-based base material. Such a resistance control material may include components having high electrical resistance so that the conductivity of the radio wave control cover layer CN is reduced, and may include, for example, an insulating inorganic material.

The radio wave control cover layer CN may maintain high electrical resistance properties thereof by adjusting a content of the resistance control material, and may have electrical resistance with a value of, for example, 10⁷ Ωm or more. Since the radio wave control cover layer CN is maintained in a high resistance state, an electrical conductivity of the radio wave control cover layer CN may be reduced so that a signal through the IC chip RC smoothly flows, and in an embodiment, signal sensitivity may be improved so that a signal recognition distance is increased.

For example, in a case in which the electric conductivity of the radio wave control cover layer CN is low when a signal is transmitted through the IC chip RC of the electronic element unit RD, a case in which an electrical signal is converted into electrical energy in the radio wave control cover layer CN or electrical interference occurs is reduced, so that the efficiency of signal transmission may be improved, and as a result, the signal recognition distance may be increased. As a specific example, when the electronic element unit RD is in the form of an RFID tag, signal recognition efficiency of an RFID reader may be improved.

The resistance control material of the radio wave control cover layer CN may include various materials, and in an embodiment, the resistance control material may include silicon oxide, for example, silica.

As a specific example, the resistance control material included in the radio wave control cover layer CN, as an example, the silica may be included in an amount of 10 wt% to 55 wt% relative to the rubber-based base material. When the resistance control material is applied to the tire by being included in an amount of 10 wt% or more to secure high resistance properties and in an amount of 55 wt% or less to secure a tensile strength of the radio wave control cover layer CN, stable coupling characteristics and durability may be maintained even when the radio wave control cover layer CN moves together with the tire,

As an optional embodiment, the resistance control material included in the radio wave control cover layer CN, as an example, the silica may be included in an amount of 25 wt% to 45 wt% relative to the rubber-based base material.

As an optional embodiment, the resistance control material of the radio wave control cover layer CN may include various materials in addition to the material described above, and may also include talc or calcium carbonate (CaCO₃).

Further, the radio wave control cover layer CN may further include a reinforcing material. The reinforcing material may include a resin-based material and may include, for example, a phenolic resin-based material. As a specific example, the reinforcing material of the radio wave control cover layer CN may include alkyl phenol-based resin.

Further, as an example, the reinforcing material of the radio wave control cover layer CN may include alkyl phenol-formaldehyde resin.

The radio wave control cover layer CN may include the reinforcing material, and thus a tensile strength thereof is secured, and the weakening of the coupling force with the rubber-based base material may be reduced when the radio wave control cover layer CN includes, for example, the above-described resistance control material for high resistance control, as a specific example, when the radio wave control cover layer CN includes the insulating inorganic material such as silica.

Further, the radio wave control cover layer CN may include a phenolic resin-based material such as alkyl phenol-formaldehyde resin as the reinforcing material, and thus the coupling force between the hydroxyl group and the rubber-based base material may be improved, and the tensile strength of the radio wave control cover layer CN may be improved, and as a result, durability of the radio wave control cover layer CN may be improved.

As a specific example, the resin included in the radio wave control cover layer CN may be included in an amount of 0.5 wt% to 5 w% relative to the rubber-based base material. The coupling force with the rubber-based base material may be improved by including the resin in an amount of 0.5 wt% or more, and a stable state of the radio wave control cover layer CN may be maintained by the resin together with the resistance control material including the insulating inorganic material by including the resin in an amount of 5 wt% or less.

As an optional embodiment, the reinforcing material included in the radio wave control cover layer CN, for example, the resin may be included in an amount of 1 wt% to 3 wt% relative to the rubber-based base material.

As an optional embodiment, the reinforcing material of the radio wave control cover layer CN may include various materials in addition to the material described above, and may include a petroleum resin-based material, a coumaron-indene resin-based material, and a cresol-formaldehyde resin-based material.

Meanwhile, example data obtained by testing the above-described components of the radio wave control cover layer CN and various items therefor are disclosed in Table 1 below.

**[Table 1]**

| | | T1 | T2 | T3 | T4 | T5 | T6 | T7 |
|---|---|---|---|---|---|---|---|---|
| PPL | CB | 40 | 50 | 35 | 15 | 20 | 5 | 15 |
| | AC | 30 | 0 | 0 | 0 | 0 | 0 | 0 |
| | SA | 0 | 0 | 15 | 35 | 80 | 110 | 35 |
| | RS | 0 | 0 | 0 | 0 | 0 | 0 | 2 |
| | SU | 70 | 50 | 50 | 50 | 100 | 115 | 52 |
| TT | RFD | 70 | 50 | 100 | 120 | 150 | 150 | 120 |
| | ERS | 1200 | 35100 | 4.0x10⁷ | 4.0x10¹⁰ | 4.0x10¹² | 4.0x10¹³ | 4.0x10⁷ |
| | HD | 71 | 61 | 56 | 60 | 66 | 70 | 60 |
| | MD | 80 | 75 | 55 | 64 | 74 | 68 | 78 |
| | TS | 110 | 190 | 150 | 170 | 170 | 163 | 200 |
| | EB | 500 | 570 | 620 | 410 | 550 | 640 | 450 |

A content indication PPL represents a value in wt% (parts by weight per hundred parts (phr)) of the rubber-based base among the materials included in the above-described radio wave control cover layer CN.

Specifically, the content indication PPL includes a carbon black content CB, an acetylene carbon black content AC, a silica content SA, a resin-based material content RS, and a sum SU is the sum of the above content values.

For example, it shows that a first sample T1 has the carbon black content CB of 40 wt% and the acetylene carbon black content AC of 15 wt% relative to the rubber-based base, and a seventh sample T7 has the carbon black content CB of 15 wt%, the silica content SA of 35 wt%, and the resin-based material content RS of 2 wt% relative to the rubber-based base.

A characteristic item TT includes a signal recognition distance RFD, an electrical resistance ERS, a hardness HD, a modulus MD, a tensile strength TS, and an elongation at break EB.

The signal recognition distance RFD may indicate, for example, an RFID recognition distance for the electronic element unit RD described above, and is expressed as a relative index for convenience of description. The electrical resistance ERS may have the units of Ωm, and the hardness HD may be hardness measured by various methods, and may be, for example, shore hardness.

Further, as an example, the modulus MD may have the units of kgf/cm², the tensile strength TS may have the units of kgf/cm², and the elongation at break EB may have the units of %.

Referring to <Table 1>, it shows that a third sample T3, a fourth sample T4, a fifth sample T5, a sixth sample T6, and the seventh sample T7 each having the silica content SA have the electrical resistance ERS of a very high value as compared with the first sample T1 and a second sample T2 that do not have the silica content SA.

Further, <Table 1> shows that the third sample T3, the fourth sample T4, the fifth sample T5, the sixth sample T6, and the seventh sample T7 have the signal recognition distance RFD of a high value as compared with the first sample T1 and a second sample T2 that do not have the silica content SA.

As described above, it can be seen from <Table 1> that the radio wave control cover layer CN includes a resistance control material, for example, a material such as silica, so that electrical conductivity thereof is reduced. and accordingly, when a signal passes through the radio wave control cover layer CN, signal loss due to conversion into electrical energy or interference may be reduced, thereby increasing a signal recognition distance.

Meanwhile, it shows that the seventh sample T7 having the resin-based material content RS has excellent characteristics of the tensile strength TS as compared with the third sample T3, the fourth sample T4, the fifth sample T5, and the sixth sample T6. For example, it can be seen that the seventh sample T7 has a tensile strength of 200, which is greater that tensile strengths of 150, 170, 170, and 163 respectively of the third sample T3, the fourth sample T4, the fifth sample T5, and the sixth sample T6.

Further, the elongation at break EB of the seventh sample T7 is 450, which is increased by 40% as compared to 410 that is the elongation at break EB of the fourth sample T4, which has the silica content SA having the same value as the seventh sample T7. It can be seen that the elongation at break is improved due to the resin-based material content RS on the basis of the same silica content SA.

As described above, it can be seen from <Table 1> that high resistance and increased signal recognition distance may be achieved as the radio wave control cover layer CN includes the resistance control material, and at the same time, durability may be improved as the radio wave control cover layer CN further includes a material such as a reinforcing material, for example, resin.

As a specific example, when forming the radio wave control cover layer CN, the radio wave control cover layer CN includes various materials, for example, the resistance control material and the reinforcing material together with a rubber-based base material, and may include, for example, the contents of the seventh sample T7 of Table 1, as a specific example, the silica content SA and the resin-based material content RS.

The tire of the present embodiment is allowed to transmit or receive one or more signals by disposing the electronic element unit in one region thereof, and to secure and use various pieces of information by using the electronic element unit in the form of, for example, an RFID tag.

Further, various pieces of information for each tire may be easily managed, so that the various pieces of information may be easily and precisely managed in tire manufacturing, sales, and post-management.

Further, the electronic element unit may also include an electronic element, such as an IC chip, and a radio wave control cover layer that is adjacent to the electronic element and covers at least one surface of the electronic element.

The radio wave control cover layer may include a rubber-based base material to enhance coupling characteristics with the tire. In addition, the radio wave control cover layer may include a resistance control material so that electrical resistance thereof is increased, and the electrical resistance may have a value, for example, 10⁷ Ωm or more, and accordingly, when a signal passes through the radio wave control cover layer CN, a phenomenon in which signal efficiency is lowered as a portion of a signal is converted into electrical energy or interfered through the radio wave control cover layer CN may be reduced or prevented. Accordingly, the flow of a signal through the electronic element may be smoothed, and in an embodiment, a signal recognition distance may be increased by improving signal sensitivity. In addition, the radio wave control cover layer may further include a reinforcing material, for example, a resin-based material that enhances coupling force with the rubber-based material, so that a tensile strength of the radio wave control cover layer may be improved.

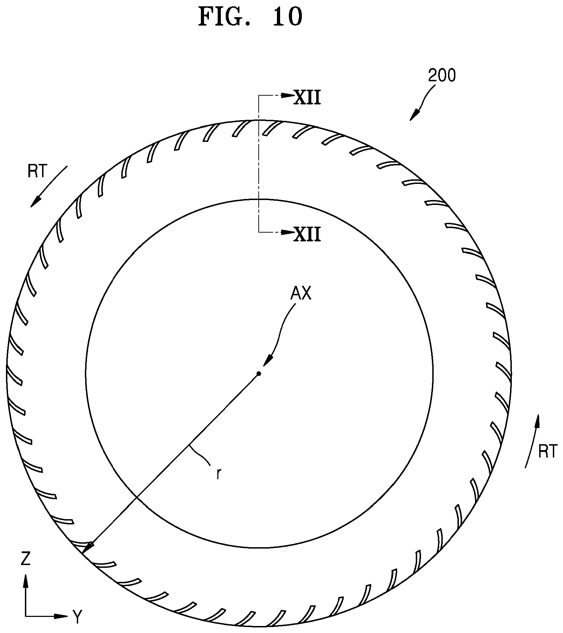

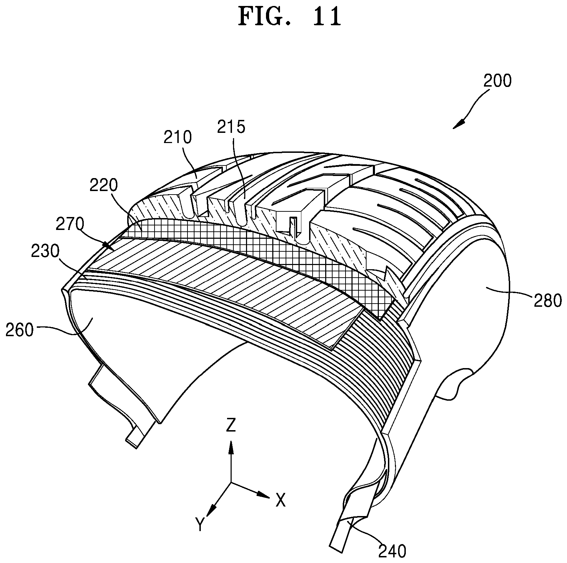

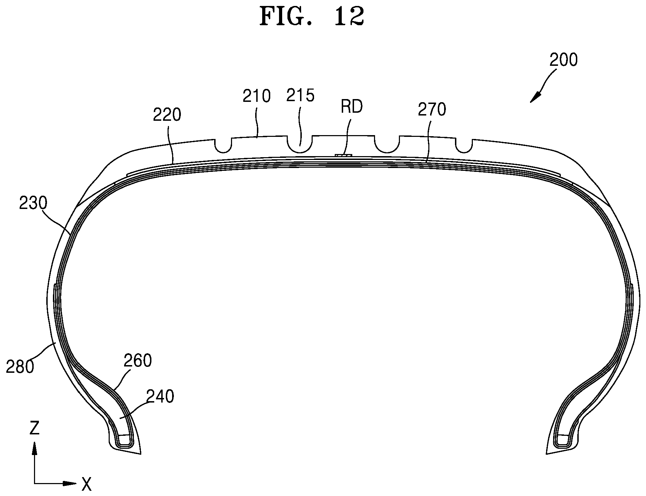

FIG. 10 is a front view of a tire, FIG. 11 is a partial perspective view for describing the tire of FIG. 10 when viewed in one direction, and FIG. 12 is a cross-sectional view taken along line XII-XII of FIG. 10.

Referring to FIGS. 10 to 12, a tire 200 of the present example may include a tread portion 210, a sidewall 280, and an electronic element unit RD.

Referring to FIG. 12, the tire 200 may have a shape extending in a circumferential direction RT about a central axis AX. In addition, a wheel (not shown) may be coupled to an inner side of the tire 200 with respect to a radial direction r from the central axis AX.

The tread portion 210 may include a region that faces a road surface when the tire 200 is mounted on a vehicle and then driven. For example, the tread portion 210 may include the region in contact with the road surface when the vehicle is driven.

The tread portion 210 may include various materials. For example, the tread portion 210 may be manufactured by adding various additives to a rubber-based material base.

The tread portion 210 may have one or more patterns, and a plurality of grooves 215 may be formed to be adjacent to these patterns. The groove 215 may have a shape elongated in at least a first direction. In addition, the groove 215 may also include a region having a shape elongated in a direction crossing the first direction.

The number and shape of the grooves 215 may be variously determined depending on the driving characteristics and use of the tire 200.

The sidewall 280 is connected to the tread portion 210. As an optional embodiment, in order to be effectively mounted to the wheel (not shown), the tire 200 may include a bead portion 240, and the sidewall 280 may be disposed between the tread portion 210 and the bead portion 240.

The sidewall 280 may include a region to be spaced apart from the road surface when the tire 200 is mounted on the vehicle and then driven. Through the sidewall 280, the tire 200 may perform a bending and stretching motion.

The sidewall 280 is formed on both sides with respect to the tread portion 210 of the tire 200, and the material of the sidewall 280 on one side and the material of the sidewall 280 on the other side may be the same.

As an optional embodiment, the material of the sidewall 280 on one side and the material of the sidewall 280 on the other side may be different.

As another optional embodiment, the sidewall 280 on one side and the sidewall 280 on the other side may have different compositions, so that moduli thereof may be different.

As an optional embodiment, the bead portion 240 may be formed in a region of the sidewall 280 in a direction opposite to the region of the sidewall 280, which is connected to the tread portion 210.

The bead portion 240 may have various shapes and may be formed to include, for example, a core region and a buffer region.

The core region of the bead portion 240 may have a region in the form of a wire bundle, which has a square or hexagonal shape, in which a wire, for example, a steel wire is coated with rubber.

The buffer region of the bead portion 240 may be formed to surround the core region, and may distribute a load on the core region and mitigate an external impact.

Further, the tire 200 may also include a body ply 230 in a region overlapping at least the tread portion 210.

The body ply 230 forms a main frame of the tire 200, and may support a load received by the tire 200 and absorb an impact of the road surface. As an optional embodiment, the body ply 230 may be in the form of a cord.

As an optional embodiment, a cap ply 220 may be disposed between the body ply 230 and the tread portion 210. The cap ply 220 may include various materials and may be in the form of a plurality of cords.

As an optional embodiment, a belt layer 270 may be further disposed between the cap ply 220 and the body ply 230. The belt layer 270 may mitigate an impact applied to the tire 200 from the road surface when the vehicle equipped with the tire 200 is driven, and may extend a tread surface of the tread portion 210 to improve tread characteristics and driving stability.

The belt layer 270 may be formed in various forms, for example, may include a plurality of layers.

As an optional embodiment, an inner liner 260 may be disposed on an inner side of the body ply 230. The inner liner 260 may be disposed on the innermost side of the tire 200 so that air leakage may be reduced or prevented.

The inner liner 260 may include various materials, for example, may include rubber-based materials to be attached to adjacent layers. In addition, as an optional embodiment, an organic or inorganic material may be included.

The electronic element unit RD may be disposed in one region of the tire 200, in an example which is outside the scope of the invention, may be disposed in the tread portion 210.

The electronic element unit RD may be formed to transmit or receive one or more signals and may be one of the electronic element units RD described in the embodiments described above.

As an example, the electronic element unit RD may be a sensor element capable of checking one or more pieces of information, and as another example, the electronic element unit RD may include a tag, which is used for RFID, as an electronic element that uses a radio frequency. As a specific example, the electronic element unit RD may include an IC chip RC and one or more antenna portions RA1 and RA2. The IC chip RC may be formed to process one or more signals and may include a memory and other circuitry.

In an embodiment, the electronic element unit RD may have various other types of structures, and the type of the RFID tag may be determined in various ways. For example, depending on the application, unlike the above, the electronic element unit RD may be in the form of a tag without having the IC chip. Further, the electronic element unit RD may have a structure in which a battery for operating the RFID is built-in, or may be a passive device type without a battery. In addition, when a memory is included in the IC chip RC provided in the RFID, various types of functions such as reading and writing the memory may be enabled.

The electronic element unit RD may be disposed in various ways, and as an example, the electronic element unit RD may be disposed in the form of being inserted into the tread portion 210. For example, the electronic element unit RD may be disposed in advance during the manufacturing process of the tire 200 including the tread portion 210 and may be integrally formed with the tire 200 during a forming process. In addition, as another example, the forming process of the tire 200 including the tread portion 210 may be performed, and thereafter, the electronic element unit RD may be inserted and disposed.

Meanwhile, the electronic element unit RD may transmit or receive various signals, and during this process, an electrical circuit may operate, and at this point, the electronic element unit RD may be inserted into the tread portion 210 to have a structure in contact with, as a specific example, in close contact with the tread portion 210, and accordingly, stable driving may be easily secured.

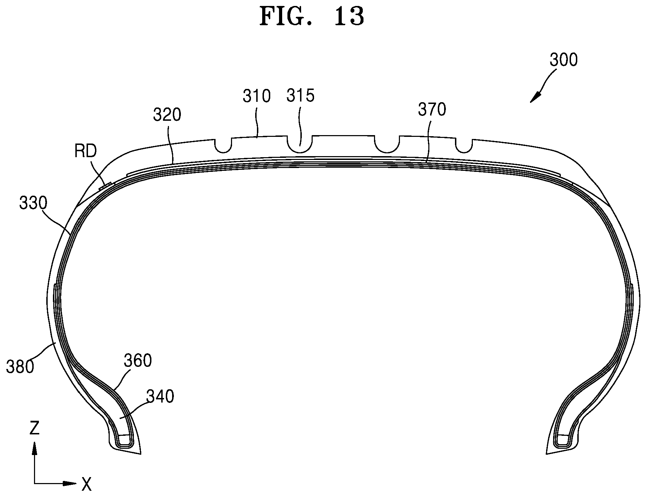

FIG. 13 is a cross-sectional view schematically illustrating a tire which is outside the scope of the invention.

Referring to FIG. 13, a tire 300 of the present example may include a tread portion 310, a sidewall 380, and the electronic element unit RD.

For the convenience of description, descriptions will be provided based on differences from the above-described embodiment.

The tread portion 310, grooves 315, the sidewall 380, a bead portion 340, a body ply 330, a cap ply 320, a belt layer 370, and an inner liner 360 illustrated in FIG. 13 are the same as those described in the foregoing embodiment, or some design changes may be made within a similar range, and thus a detailed description thereof will be omitted.

The electronic element unit RD may be formed in a region far from a center of the tread portion 310 of the tire 300, or may be formed in a region adjacent to a connection portion of the tread portion 310 and the sidewall 380. In addition, as another example, the electronic element unit RD may be formed further outward than the outermost groove 315 in a region of the tread portion 310.

As an optional embodiment, the electronic element unit RD may be disposed in a shoulder portion, and a thick thickness of the shoulder portion may facilitate the stable arrangement of the electronic element unit RD.

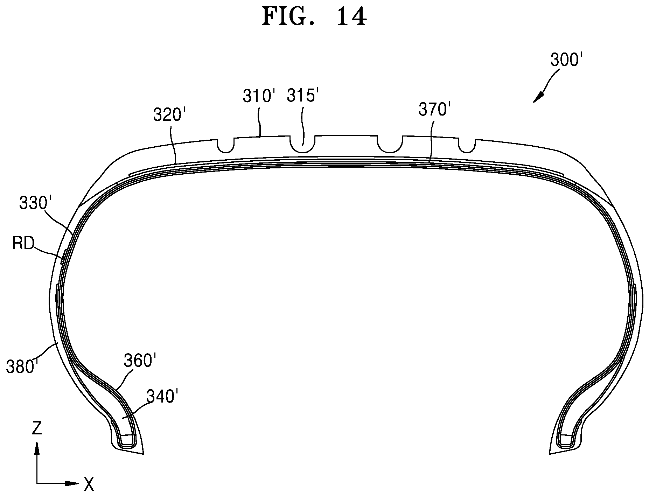

FIG. 14 is a cross-sectional view schematically illustrating a tire which is outside the scope of the invention.

Referring to FIG. 14, a tire 300' of the present example may include a tread portion 310', a sidewall 380', and the electronic element unit RD.

For the convenience of description, descriptions will be provided based on differences from the above-described embodiment.

The tread portion 310', grooves 315', the sidewall 380', a bead portion 340', a body ply 330', a cap ply 320', a belt layer 370', and an inner liner 360' illustrated in FIG. 14 are the same as those described in the foregoing embodiments, or some design changes may be made within a similar range, and thus a detailed description thereof will be omitted.

The electronic element unit RD may be disposed in one region of the sidewall 380' of the tire 300', for example, may be disposed on one inner surface or an inside of the sidewall 380'. Accordingly, the easy of signal recognition in the electronic element unit RD may be improved even outside the tire 300'.

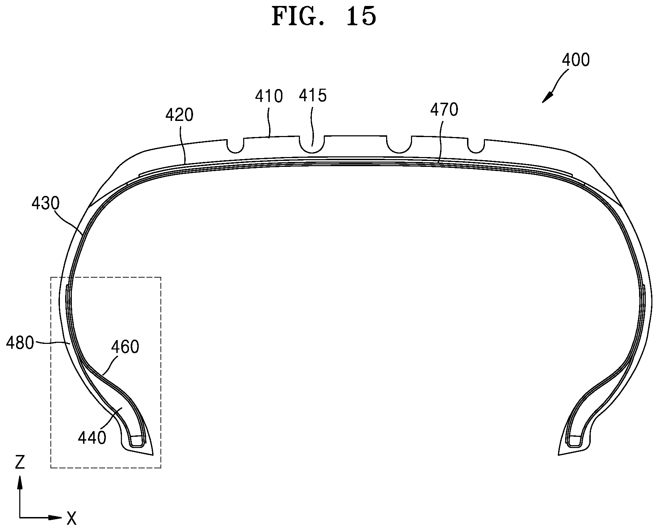

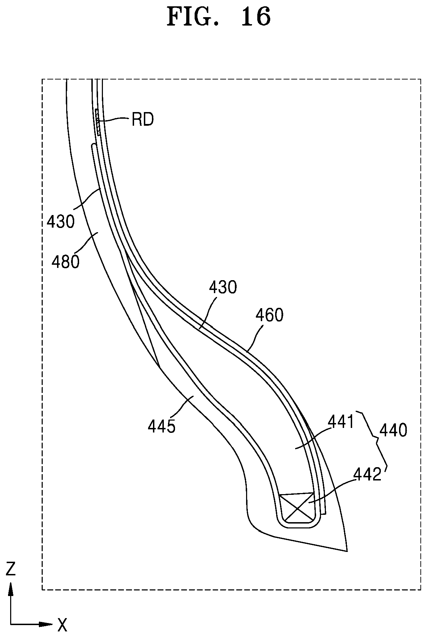

FIG. 15 is a cross-sectional view schematically illustrating a tire that is outside the scope of the invention, and FIG. 16 is an enlarged view of portion P of FIG. 15.

Referring to FIGS. 15 to 16, a tire 400 of the present arrangement may include a tread portion 410, a sidewall 480, and an electronic element unit RD.

For convenience of explanation, it will be described with reference to the above-described embodiments.

The tread portion 410, grooves 415, the sidewall 480, a bead portion 440, a body ply 430, a cap ply 420, a belt layer 470, and an inner liner 460 illustrated in FIGS. 15 and 16 are the same as those described in the foregoing embodiments, or some design changes may be made within a similar range, and thus a detailed description thereof will be omitted.

Referring to the drawings, as an optional feature, for example, the bead portion 440 may include a bead filler portion 441 and a bead core portion 442. The bead core portion 442 may include a region in the form of a wire bundle, which has a square or hexagonal shape, in which a wire, for example, a steel wire is coated with rubber. The bead filler portion 441 may include a buffer region configured to distribute a load on the bead core portion 442 and mitigate an external impact, for example, may include a rubber material.

The electronic element unit RD may be disposed between the inner liner 460 and the body ply 430. For example, the electronic element unit RD may be disposed between the inner liner 460 and the body ply 430 at a position away from a double-overlapping region of the body ply 430 in a region not overlapping the bead portion 440.

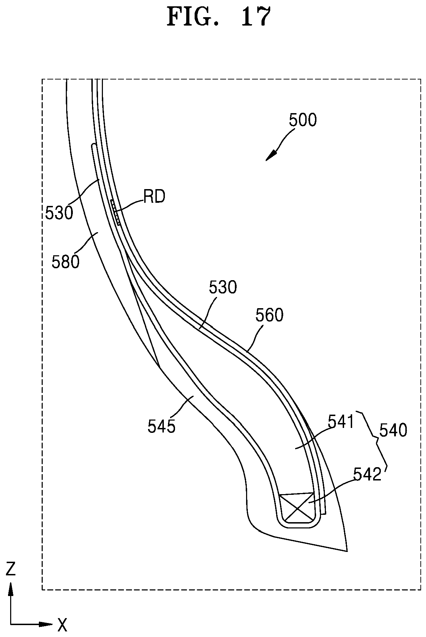

FIG. 17 is a cross-sectional view schematically illustrating a tire that is outside the scope of the invention.

Referring to FIG. 17, a tire 500 of the present arrangement may include a tread portion (not shown), a sidewall 580, and the electronic element unit RD.

For convenience of explanation, it will be described with reference to the above-described embodiments.

Since the tread portion (not shown), grooves (not shown), the sidewall 580, a bead portion 540, a body ply 530, and an inner liner 560 are the same as those described in the foregoing embodiments, or some design changes may be made within a similar range, and thus a detailed description thereof will be omitted.

The electronic element unit RD may be disposed between the inner liner 560 and the body ply 530. For example, the electronic element unit RD may be disposed between one of the double overlapping body plies 530 and the inner liner 560 at a position corresponding to a double overlapping region of the body ply 530 in a region not overlapping the bead portion 540.

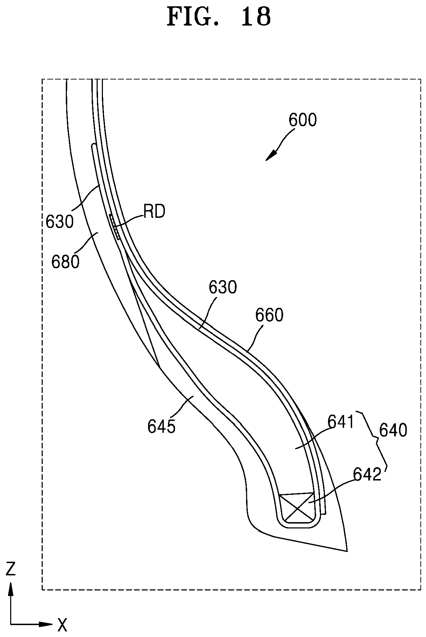

FIG. 18 is a cross-sectional view schematically illustrating a tire that is outside the scope of the invention.

Referring to FIG. 18, a tire 600 of the present arrangement may include a tread portion (not shown), a sidewall 680, and the electronic element unit RD.

For convenience of explanation, it will be described with reference to the above-described embodiments.

Since the tread portion (not shown), grooves (not shown), the sidewall 680, a bead portion 640, a body ply 630, and an inner liner 660 are the same as those described in the foregoing embodiments, or some design changes may be made within a similar range, and thus a detailed description thereof will be omitted.

The electronic element unit RD may be disposed between the body ply 630 and the body ply 630. For example, the electronic element unit RD may be disposed between the body ply 630 and the body ply 630 at a position corresponding to a double-overlapping region of the body ply 630 in a region not overlapping the bead portion 640.

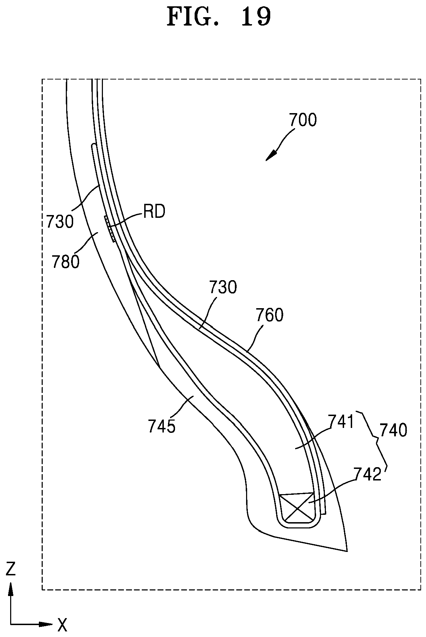

FIG. 19 is a cross-sectional view schematically illustrating a tire that is outside the scope of the invention.

Referring to FIG. 19, a tire 700 of the present arrangement may include a tread portion (not shown), a sidewall 780, and the electronic element unit RD.

For convenience of explanation, it will be described with reference to the above-described embodiments.

Since the tread portion (not shown), grooves (not shown), the sidewall 780, a bead portion 740, a body ply 730, and an inner liner 760 are the same as those described in the foregoing embodiments, or some design changes may be made within a similar range, and thus a detailed description thereof will be omitted.

The electronic element unit RD may be disposed between the body ply 730 and the sidewall 780. For example, the electronic element unit RD may be disposed between the body ply 730 and the sidewall 780 at a position corresponding to a double-overlapping region of the body ply 730 in a region not overlapping the bead portion 740.

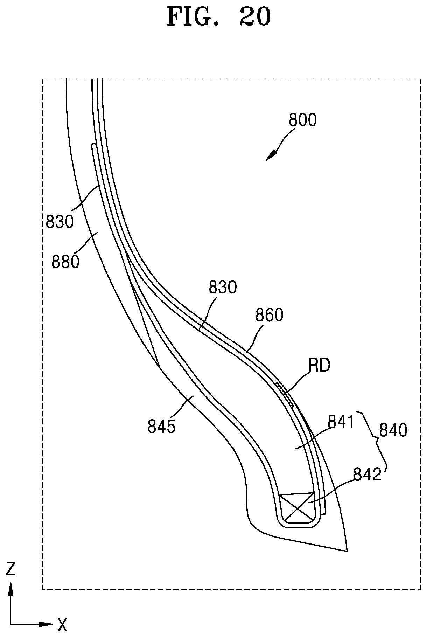

FIG. 20 is a cross-sectional view schematically illustrating a tire that is outside the scope of the invention.

Referring to FIG. 20, a tire 800 of the present arrangement may include a tread portion (not shown), a sidewall 880, and the electronic element unit RD.

For convenience of explanation, it will be described with reference to the above-described embodiments.

Since the tread portion (not shown), grooves (not shown), the sidewall 880, a bead portion 840, a body ply 830, and an inner liner 860 are the same as those described in the foregoing embodiments, or some design changes may be made within a similar range, and thus a detailed description thereof will be omitted.

The electronic element unit RD may be disposed between the body ply 830 and the inner liner 860. For example, the electronic element unit RD may be disposed between the body ply 830 and the inner liner 860 in a region overlapping the bead portion 840.

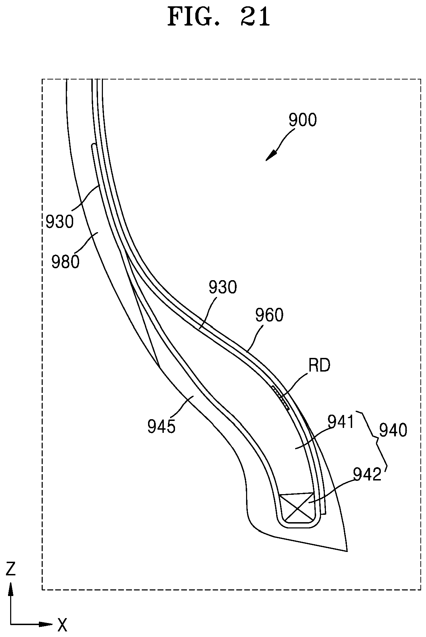

FIG. 21 is a cross-sectional view schematically illustrating a tire according to another embodiment of the invention .

Referring to FIG. 21, a tire 900 of the present embodiment may include a tread portion (not shown), a sidewall 980, and the electronic element unit RD.

For convenience of explanation, it will be described with reference to the above-described embodiments.

Since the tread portion (not shown), grooves (not shown), the sidewall 980, a bead portion 940, a body ply 930, and an inner liner 960 are the same as those described in the foregoing embodiments, or some design changes may be made within a similar range, and thus a detailed description thereof will be omitted.

The electronic element unit RD may be disposed between the body ply 930 and the bead portion 940. For example, the electronic element unit RD may be disposed between the body ply 930 and the bead portion 940 so as to face the inner liner 960 in a region overlapping the bead portion 940, and in an embodiment, the electronic element unit RD may be disposed between the body ply 930 and a bead filler portion 941 of the bead portion 940.

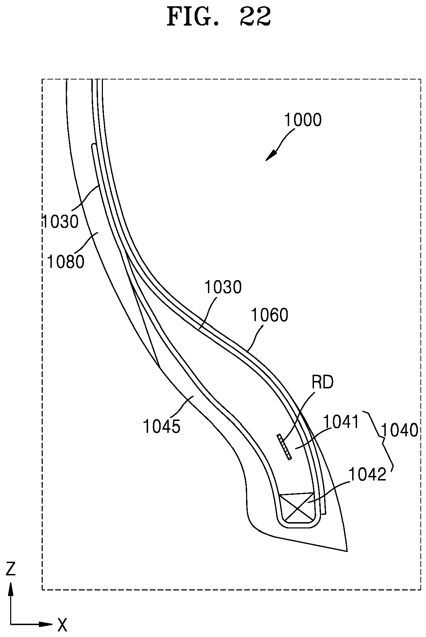

FIG. 22 is a cross-sectional view schematically illustrating a tire that is outside the scope of the invention.

Referring to FIG. 22, a tire 1000 of the present arrangement may include a tread portion (not shown), a sidewall 1080, and the electronic element unit RD.

For convenience of explanation, it will be described with reference to the above-described embodiments.

Since the tread portion (not shown), grooves (not shown), the sidewall 1080, a bead portion 1040, a body ply 1030, and an inner liner 1060 are the same as those described in the foregoing embodiments, or some design changes may be made within a similar range, and thus a detailed description thereof will be omitted.

The electronic element unit RD may be disposed on an inner side of the bead portion 1040. For example, the electronic element unit RD may be disposed on an inner side of a bead filler portion 1041 of the bead portion 1040.

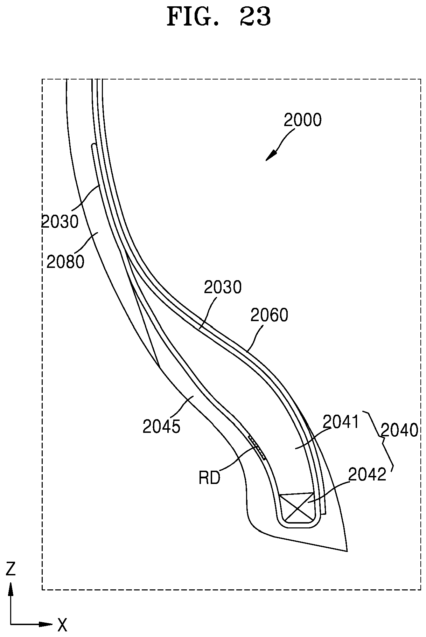

FIG. 23 is a cross-sectional view schematically illustrating a tire according to yet another embodiment of the invention.

Referring to FIG. 23, a tire 2000 of the present embodiment may include a tread portion (not shown), a sidewall 2080, and the electronic element unit RD.

For convenience of explanation, it will be described with reference to the above-described embodiments.

Since the tread portion (not shown), grooves (not shown), the sidewall 2080, a bead portion 2040, a body ply 2030, and an inner liner 2060 are the same as those described in the foregoing embodiments, or some design changes may be made within a similar range, and thus a detailed description thereof will be omitted.

The electronic element unit RD may be disposed between the body ply 2030 and the bead portion 2040. For example, the electronic element unit RD may face a surface of the bead portion 2040, which is opposite to a surface of the bead portion 2040 facing the inner liner 2060, among the surfaces of the bead portion 2040, and may be disposed between the body ply 2030 and the bead portion 2040, and in an embodiment, the electronic element unit RD may be disposed between the body ply 2030 and a bead filler portion 2041 of the bead portion 2040.

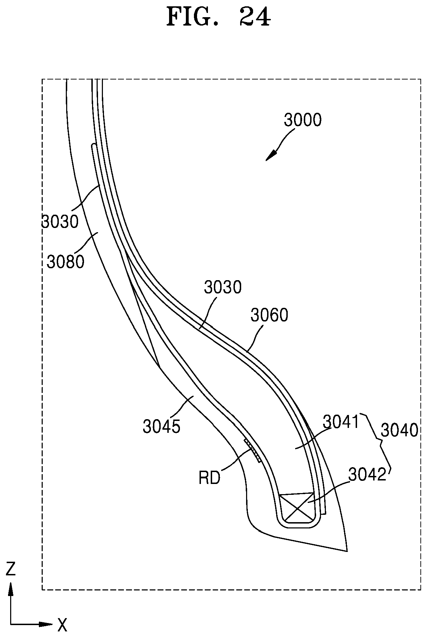

FIG. 24 is a cross-sectional view schematically illustrating a tire that is outside the scope of the invention.

Referring to FIG. 24, a tire 3000 of the present arrangement may include a tread portion (not shown), a sidewall 3080, and the electronic element unit RD.

For convenience of explanation, it will be described with reference to the above-described embodiments.

Since the tread portion (not shown), grooves (not shown), the sidewall 3080, a bead portion 3040, a body ply 3030, and an inner liner 3060 are the same as those described in the foregoing embodiments, or some design changes may be made within a similar range, and thus a detailed description thereof will be omitted.

As an optional embodiment, a rim strip portion 3045 may be formed to be connected to the sidewall 3080. The rim strip portion 3045 may be formed to face a rim (or wheel) when the tire 3000 is coupled to the rim (or wheel), and may protect the bead portion 3040 when the bead portion 3040 corresponds to the rim and improve a coupling force with the rim.

The electronic element unit RD may be disposed between the body ply 3030 and the rim strip portion 3045. For example, the electronic element unit RD may be disposed between the body ply 3030 and the rim strip portion 3045 to overlap the bead portion 3040.

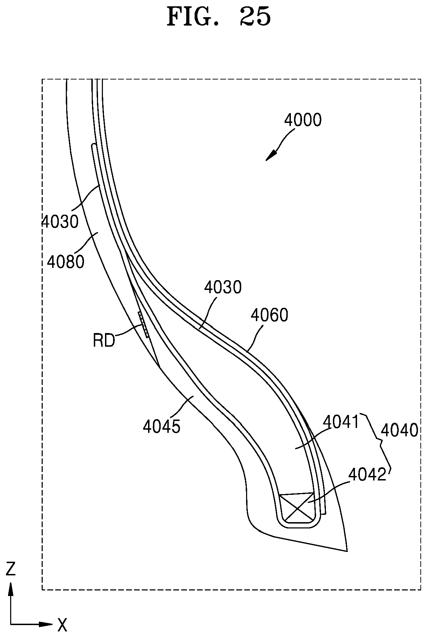

FIG. 25 is a cross-sectional view schematically illustrating a tire that is outside the scope of the invention.

Referring to FIG. 25, a tire 4000 of the present arrangement may include a tread portion (not shown), a sidewall 4080, and the electronic element unit RD.

For convenience of explanation, it will be described with reference to the above-described embodiments.

Since the tread portion (not shown), grooves (not shown), the sidewall 4080, a bead portion 4040, a body ply 4030, and an inner liner 4060 are the same as those described in the foregoing embodiments, or some design changes may be made within a similar range, and thus a detailed description thereof will be omitted.

As an optional embodiment, a rim strip portion 4045 may be formed to be connected to the sidewall 4080. The rim strip portion 4045 may be formed to face a rim (or wheel) when the tire 4000 is coupled to the rim (or wheel), and may protect the bead portion 4040 when the bead portion 4040 corresponds to the rim and improve a coupling force with the rim.

The electronic element unit RD may be disposed between the sidewall 4080 and the rim strip portion 4045. For example, the electronic element unit RD may be disposed between the sidewall 4080 and the rim strip portion 4045 in a region overlapping the bead portion 4040.

As described above, the electronic element unit RD may include one or more electronic elements, for example, a radio wave control cover layer covering an IC chip. The radio wave control cover layer may stably maintain a high resistance by including a resistance control material to control an electrical resistance thereof to be high, and accordingly, a reduction of a radio wave signal and an interference may be reduced, thereby increasing signal transmission efficiency and increasing a signal recognition distance. Accordingly, design freedom and convenience in which the electronic element unit RD can be disposed at various positions of a tire may be improved. In addition, the radio wave control cover layer includes a reinforcing material, and the reinforcing material improves a coupling force with a rubber-based material and improves a tensile strength of the radio wave control cover layer, thereby improving the overall durability and an elongation at break of the radio wave control cover layer.

While the invention has been described with reference to the embodiments shown in the drawings, which are merely exemplary, it will be understood by those of ordinary skill in the art that various modifications and equivalent other embodiments can be implemented from the given embodiments. Accordingly, the genuine technical range of the invention to be protected should be determined by the technical idea of the accompanying claims.

The particular implementations shown and described herein are illustrative examples of the embodiments and are not intended to otherwise limit the scope of the embodiments in any way. In addition, no item or element is essential to the practice of the invention unless the element is specifically described as "essential" or "critical".

The use of the terms "a" and "an" and "the" and similar referents in the context of the present invention (especially in the context of the following claims) are to be construed to cover both the singular and the plural. Further, recitation of ranges of values herein are merely intended to serve as a shorthand method of referring individually to each separate value falling within the range, unless otherwise indicated herein, and each separate value is incorporated into the specification as if it were individually recited herein. Finally, operations of all methods described herein can be performed in any suitable order unless otherwise indicated herein or otherwise clearly contradicted by context. The invention is not limited to the described order of the operations. The use of any and all examples, or example terms (e.g., "such as") provided herein, is intended merely to better illuminate the invention and does not pose a limitation on the scope of the invention unless otherwise claimed. In addition, numerous modifications and adaptations will be readily apparent to one of ordinary skill in the art without departing from the scope of the invention .

A tire according to the present embodiment may allow signal transmission or signal recognition characteristics to be improved, and may enable tire-related information management to be easily performed.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A tire (100, 2000) mounted on a moving means, the tire comprising:
a tire body (110) including a tread region that faces a road surface during at least the driving of the moving means, a sidewall (980, 2080), bead portion (940, 2040), body ply (930, 2030) and inner liner (960, 2060), wherein the bead portion (940, 2040) includes a bead filler portion (941, 2041); and
an electronic element unit (RD), including at least one electronic element, disposed in the tire body (110) and configured to transmit or receive one or more signals,
wherein the electronic element unit (RD) includes a radio wave control cover layer (CN) that is separate from the tire body (110) and disposed in the tire body (110), the radio wave control cover layer (CN) being positioned between the bead filler portion (941) and the body ply (930) of the tire body (110),
and wherein, the radio wave control cover layer (CN) includes a rubber-based base material, a resistance control material that limits the overall electrical resistance reduction of the radio wave control cover layer (CN), carbon black and a resin-based material, the rubber-based base material, the resistance control material, the carbon black and the resin material of the radio wave control cover layer being in contact with the bead filler portion (941, 2041) and the body ply (930, 2030),
wherein the radio wave control cover layer (CN) includes 25 to 45 weight percent of the resistance control material and 0.5 to 5 weight percent of the resin-based material, compared to the rubber-based base material,
wherein through control of the content of the combination of the materials of the radio wave control cover layer (CN), the radio wave control cover layer has an electrical resistance value of 10⁷ Ωm or more.

2. The tire of claim 1, wherein
the radio wave control cover layer (CN) is disposed to cover at least one surface of the electronic element.

3. The tire of claim 1, wherein
the radio wave control cover layer (CN) is disposed between the electronic element and one region of the tire body.

4. The tire of claim 1, wherein
the radio wave control cover layer (CN) includes a first layer (CN1) and a second layer (CN2) disposed to cover both sides of the electronic element.

5. The tire of claim 1, wherein
the electronic element unit (RD) further includes at least one antenna portion connected to the electronic element, and
the radio wave control cover layer (CN) is formed to cover the electronic element and the antenna portion.

6. The tire of claim 1, wherein the resin-based material includes phenolic resin-based material, and optionally a petroleum resin-based material, a coumaron-indene resin-based material, and a cresol-formaldehyde resin-based material.

7. The tire of claim 1, wherein the resistance control material includes a silicon oxide-based material.

8. The tire of claim 1, wherein the resistance control material includes a talcum-based material.

9. The tire of claim 1, wherein the resistance control material includes a calcium carbonate-based material.

## Patentansprüche

1. Reifen (100, 2000), der auf einem Bewegungsmittel montiert ist, wobei der Reifen Folgendes umfasst:
einen Reifenkörper (110), umfassend eine Profilregion, die einer Straßenoberfläche zumindest während des Fahrens des Bewegungsmittels zugewandt ist, eine Seitenwand (980, 2080), einen Wulstabschnitt (940, 2040), eine Körperlagenschicht (930, 2030) und eine Innenverkleidung (960, 2060), wobei der Wulstabschnitt (940, 2040) einen Wulstfüllstoffabschnitt (941, 2041) umfasst; und
eine Elektronisches-Element-Einheit (RD), die zumindest ein in dem Reifenkörper (110) angeordnetes elektronisches Element umfasst und zum Senden oder Empfangen von einem oder mehreren Signalen konfiguriert ist,
wobei die Elektronisches-Element-Einheit (RD) eine Funkwellensteuerungsdeckschicht (CN) umfasst, die von dem Reifenkörper (110) getrennt und in dem Reifenkörper (110) angeordnet ist, wobei die Funkwellensteuerungsdeckschicht (CN) zwischen dem Wulstfüllstoffabschnitt (941) und der Körperlagenschicht (930) des Reifenkörpers (110) angeordnet ist,
und wobei die Funkwellensteuerungsdeckschicht (CN) ein Basismaterial auf Kautschukbasis, ein Widerstandssteuerungsmaterial, das die Gesamtreduktion des elektrischen Widerstands der Funkwellensteuerungsdeckschicht (CN) begrenzt, Ruß und ein Material auf Harzbasis umfasst, wobei das Basismaterial auf Kautschukbasis, das Widerstandssteuerungsmaterial, der Ruß und das Material auf Harzbasis der Funkwellensteuerungsdeckschicht mit dem Wulstfüllstoffabschnitt (941, 2041) und der Körperlagenschicht (930, 2030) in Kontakt sind,
wobei die Funkwellensteuerungsdeckschicht (CN) 25 bis 45 Gew.-% des Widerstandssteuerungsmaterials und 0,5 bis 5 Gew.-% des Materials auf Harzbasis verglichen mit dem Material auf Kautschukbasis umfasst,
wobei die Funkwellensteuerungsdeckschicht über das Steuern des Inhalts der Kombination der Materialien der Funkwellensteuerungsdeckschicht (CN) einen elektrischen Widerstandswert von 10⁷ Ωm oder mehr aufweist.

2. Reifen nach Anspruch 1, wobei
die Funkwellensteuerungsdeckschicht (CN) angeordnet ist, um zumindest eine Fläche des elektronischen Elements zu bedecken.

3. Reifen nach Anspruch 1, wobei
die Funkwellensteuerungsdeckschicht (CN) zwischen dem elektronischen Element und einer Region des Reifenkörpers angeordnet ist.

4. Reifen nach Anspruch 1, wobei
die Funkwellensteuerungsdeckschicht (CN) eine erste Schicht (CN1) und eine zweite Schicht (CN2) umfasst, die angeordnet sind, um beide Seiten des elektronischen Elements zu bedecken.

5. Reifen nach Anspruch 1, wobei
die Elektronische-Element-Einheit (RD) ferner zumindest einen mit dem elektronischen Element verbundenen Antennenabschnitt umfasst und
die Funkwellensteuerungsdeckschicht (CN) ausgebildet ist, um das elektronische Element und den Antennenabschnitt zu bedecken.

6. Reifen nach Anspruch 1, wobei das Material auf Harzbasis ein Material auf Phenolharz und gegebenenfalls ein Material auf Petroleumharzbasis, ein Material auf Cumaron-Inden-Harzbasis und ein Material auf Cresol-Formaldehydharzbasis umfasst.

7. Reifen nach Anspruch 1, wobei das Widerstandssteuerungsmaterial ein Material auf Siliciumoxidbasis umfasst.

8. Reifen nach Anspruch 1, wobei das Widerstandssteuerungsmaterial ein Material auf Talkumbasis umfasst.

9. Reifen nach Anspruch 1, wobei das Widerstandssteuerungsmaterial ein Material auf Calciumcarbonatbasis umfasst.

## Revendications

1. Pneumatique (100, 2000) monté sur des moyen de transport, le pneumatique comprenant :
un corps de pneumatique (110) incluant une région de bande de roulement qui fait face à une surface de route pendant au moins la conduite des moyens de déplacement, un flanc (980, 2080), une partie de talon (940, 2040), une épaisseur de corps (930, 2030) et une doublure intérieure (960, 2060), dans lequel la partie de talon (940, 2040) inclut une partie de remplissage de talon (941, 2041) ; et
une unité d'élément électronique (RD), incluant au moins un élément électronique, disposée dans le corps de pneumatique (110) et configurée pour transmettre ou recevoir un ou plusieurs signaux,
dans lequel l'unité d'élément électronique (RD) inclut une couche de recouvrement de contrôle d'ondes radio (CN) qui est séparée du corps de pneumatique (110) et disposée dans le corps de pneumatique (110), la couche de recouvrement de contrôle d'ondes radio (CN) étant positionnée entre la partie de remplissage de talon (941) et la épaisseur de corps (930) du corps de pneumatique (110), et
dans lequel la couche de recouvrement de contrôle d'ondes radio (CN) inclut un matériau de base à base de caoutchouc, un matériau de contrôle de résistance qui limite la réduction de résistance électrique globale de la couche de recouvrement de contrôle d'ondes radio (CN), du noir de carbone et un matériau à base de résine, le matériau de base à base de caoutchouc, le matériau de contrôle de résistance, le noir de carbone et le matériau de résine de la couche de recouvrement de contrôle d'ondes radio étant en contact avec la partie de remplissage de talon (941, 2041) et la épaisseur de corps (930, 2030),
dans lequel la couche de recouvrement de contrôle d'ondes radio (CN) inclut de 25 à 45 pour cent en poids du matériau de contrôle de résistance et de 0,5 à 5 pour cent en poids du matériau à base de résine, par rapport au matériau de base à base de caoutchouc,
dans lequel par le contrôle du contenu de la combinaison des matériaux de la couche de recouvrement de contrôle d'ondes radio (CN), la couche de recouvrement de contrôle d'ondes radio présente une valeur de résistance électrique de 10⁷ Ωm ou plus.

2. Pneumatique selon la revendication 1, dans lequel
la couche de recouvrement de contrôle d'ondes radio (CN) est disposée pour recouvrir au moins une surface de l'élément électronique.

3. Pneumatique selon la revendication 1, dans lequel
la couche de recouvrement de contrôle d'ondes radio (CN) est disposée entre l'élément électronique et une région du corps de pneumatique.

4. Pneumatique selon la revendication 1, dans lequel
la couche de recouvrement de contrôle d'ondes radio (CN) inclut une première couche (CN1) et une seconde couche (CN2) disposées pour recouvrir les deux côtés de l'élément électronique.

5. Pneumatique selon la revendication 1, dans lequel
l'unité d'élément électronique (RD) inclut en outre au moins une partie d'antenne connectée à l'élément électronique, et
la couche de recouvrement de contrôle d'ondes radio (CN) est formée pour recouvrir l'élément électronique et la partie d'antenne.

6. Pneumatique selon la revendication 1, dans lequel le matériau à base de résine inclut un matériau à base de résine phénolique, et facultativement un matériau à base de résine de pétrole, un matériau à base de résine de coumarone-indène et un matériau à base de résine de crésol-formaldéhyde.

7. Pneumatique selon la revendication 1, dans lequel le matériau de contrôle de résistance inclut un matériau à base d'oxyde de silicium.

8. Pneumatique selon la revendication 1, dans lequel le matériau de contrôle de résistance inclut un matériau à base de talc.

9. Pneumatique selon la revendication 1, dans lequel le matériau de contrôle de résistance inclut un matériau à base de carbonate de calcium.
